# EUROPÄISCHE PATENTANMELDUNG

(11) **EP 0 872 358 A1**
(43) Veröffentlichungstag der Anmeldung: **21.10.1998**
(21) Anmeldenummer: 97810231.7
(22) Anmeldetag: 16.04.1997
(51) Int. Cl.: B60B 17/00

(54) **Schienenfahrzeugrad**

(71) Anmelder: Alusuisse Technology & Management AG, 8212 Neuhausen am Rheinfall (CH)
(72) Erfinder: Zehnder, Jürg, 8142 Uitikon (CH); Hrasche, Heinrich, 8953 Dietikon (CH)

(57) **Zusammenfassung**

Bei einem Schienenfahrzeugrad (10) mit gekrümmter oder planebener Radscheibe (14) und Laufkranz (22) weist zumindest eine der Oberflächen der Radscheibe (14) einen Radschallabsorber (26) in Form einer Zwischenschicht (28) aus einer viskoelastischen Masse und einer auf der Zwischenschicht haftenden Deckschicht (30) aus einem metallischen Werkstoff oder aus einem kohlenstoffaserverstärkten Kunststoff (CFK) auf, wobei der Radschallabsorber (26) die Radscheibe (14) zumindest in einem mittleren Scheibenteil (20) zwischen einer Radnabe (18) und einer äusseren Verdickung (16) bedeckt. Die Radscheibe (14) besteht aus einem Aluminiumwerkstoff. Das Schienenfahrzeugrad zeigt ausgezeichnete Schalldämpfungseigenschaften.

## Beschreibung

Die Erfindung betrifft ein Schienenfahrzeugrad mit Radscheibe und Laufkranz, wobei zumindest eine der Oberflächen der Radscheibe einen Radschallabsorber in Form einer Zwischenschicht aus einer viskoelastischen Masse und einer auf der Zwischenschicht haftenden Deckschicht aufweist.

Die beim Schienenverkehr pegelbestimmenden Geräuschanteile werden in der Regel von den Rädern der Schienenfahrzeuge abgestrahlt. Neben den allgemeinen Rollgeräuschen auf geraden Streckenführungen entstehen beim Schienennahverkehr beim Durchfahren von relativ engen Kurven zusätzliche Geräusche, die vorwiegend als Heulen und Kreischtöne wahrgenommen werden und als Kurvenkreischen bekannt sind. Die Räder rutschen ruckartig seitlich über die Schienenoberfläche hinweg. Der ständige Uebergang von Gleiten und Haften, der als "stick-slip"-Vorgang bezeichnet wird, führt zur Anregung des Rades in dessen Eigenfrequenz und somit zur tonalen Geräuschabstrahlung, d.h. die erzeugten Körperschallschwingungen werden als Luftschall abgestrahlt.

Durch ein Dämpfen der Körperschallschwingungen im Radkörper wird die Luftschallabstrahlung herabgesetzt. Zum Bedämpfen der Räder sind beispielsweise kraftschlüssig am Radkranz befestigte Körperschallabsorber bekannt. Derartige Absorber bestehen aus schwingungsfähigen Stahlzungen, die in eine Dämpfungsmasse aus Kunststoff eingebettet sind. Ein wesentlicher Anteil der im Rad entstehenden Schwingungsenergie wird in die Zungen eingeleitet, regt diese zu intensiven Schwingungen an und wird von der umhüllenden Dämpfungsmasse in Wärme umgesetzt. Bei einer weiteren bekannten schallabsorbierenden Konstruktion sind die Räder mit einer elastischen Verbindung zwischen Radkranz und Radscheibe ausgestattet.

Es ist auch schon vorgeschlagen worden, Radscheiben mit Entdröhnungsbelägen oder mit Sandwichbeschichtungen aus einem viskoelastischen Material und einem Konterblech zu versehen, wobei sich mit den Entdröhnungsbelägen keine, mit den Sandwichbeschichtungen nur mässige Minderungen des Rollgeräuschs ergaben.

Der vorliegenden Erfindung liegt die Aufgabe zugrunde, ein Schienenfahrzeugrad der eingangs erwähnten Art zu schaffen, welches gegenüber Rädern nach dem Stand der Technik ein weiter verbessertes Schallabsorbtionsvermögen aufweist. Zudem soll der Radschallabsorber kostengünstig herstellbar sein und auch nachträglich bei bereits montierten Rädern befestigt werden können.

Zur erfindungsgemässen Lösung der Aufgabe führt, dass zumindest die Radscheibe aus einem Aluminiumwerkstoff besteht.

Mit der erfindungsgemässen Verwendung eines Aluminiumwerkstoffes für den Radkörper, der im übrigen gekrümmt oder planeben sein kann, ergibt sich zusammen mit dem Schallabsorber im viskoelastischen Verbund gegenüber den bekannten Rädern in Stahlausführung neben einer massiven Gewichtseinsparung eine weiter verbesserte Dämpfung der vom Rad abgestrahlten Körperschallenergie. Durch das günstigere Abrollverhalten der gedämpften Radkörper ergibt sich zudem eine geringere Schwingungsanregung der Eisenbahnschienen und demzufolge auch eine verringerte Schallabstrahlung.

Bei einer bevorzugten Ausführungsform des Schienenfahrzeugrades besteht die Deckschicht aus einem metallischen Werkstoff, insbesondere aus einem Stahlblech. Ein anderer geeigneter Werkstoff mit gutem Schallabsorptionsvermögen ist kohlenstoffaserverstärkter Kunststoff (CFK).

Geeignete Werkstoffe für die Radscheibe sind Aluminiumlegierungen sowie Legierungen auf der Basis von Aluminium mit metallischen oder nichtmetallischen Anteilen hochschmelzender Partikel und/oder Fasern (Metal Matrix Composites).

Als Metallmatrix sind insbesondere Aluminiumlegierungen geeignet. Deren Grundeigenschaften wie mechanische Festigkeit und Dehnung können in bekannter Weise über die verschiedenen Legierungstypen erreicht werden. Mit den nichtmetallischen Zusätzen können u.a. die Härte, die Steifigkeit, die Verschleissfestigkeit sowie weitere Eigenschaften günstig beeinflusst werden. Bevorzugte nichtmetallische Zusätze sind keramische Werkstoffe wie Metalloxide, Metallnitride und Metallkarbide. Beispiele derartiger Werkstoffe sind Siliziumkarbid, Aluminiumoxid, Borkarbid, Siliziumnitrid und Bornitrid.

Bei einer zweckmässigen Ausgestaltung des erfindungsgemässen Schienenfahrzeugrades besteht der Laufkranz aus Stahl und ist auf die Aluminium-Radscheibe aufgeschrumpft.

Eine hohe Gewichtseinsparung mit zusätzlich höherer Verschleissfestigkeit gegenüber Stahl ergibt sich mit einem auf die Radscheibe aufgeschrumpften Laufkranz aus einem partikel- oder faserverstärkten Aluminiumwerkstoff, wobei der Laufkranz auch integral an eine Radscheibe aus demselben partikel- oder faserverstärkten Aluminiumwerkstoff angeformt sein kann, d. h. bei einer Ausführung des gesamten Rades als Metal Matrix Composite.

Eine Schalldämpfung tritt bereits bei geringen Dicken der viskoelastischen Zwischenschicht und der metallischen Deckschicht auf. Ueblicherweise liegen die Dicken der genannten Schichten zwischen etwa 0,5 bis 4 mm, insbesondere etwa zwischen 1 und 3 mm.

Damit auch bereits montierte Räder mit einem erfindungsgemässen Radschallabsorber nachgerüstet werden können, kann dieser als Verbundmaterial in geteilter Ausführung, beispielsweise in der Form zweier Halbschalen, hergestellt werden.

Die Befestigung des Radschallabsorbers an der Radscheibe erfolgt zweckmässigerweise über eine Verklebung. Hierbei kann als Klebstoff direkt die viskoelastische Zwischenschicht dienen. Bei einer anderen Variante wird der Klebstoff auf die Radscheibe und/oder die Zwischenschicht aufgetragen.

Der Radschallabsorber bedeckt die Radscheibe zumindest in einem mittleren Scheibenteil zwischen einer Radnabe und einer äusseren Verdickung, wobei die Abdeckung auch vollflächig sein kann.

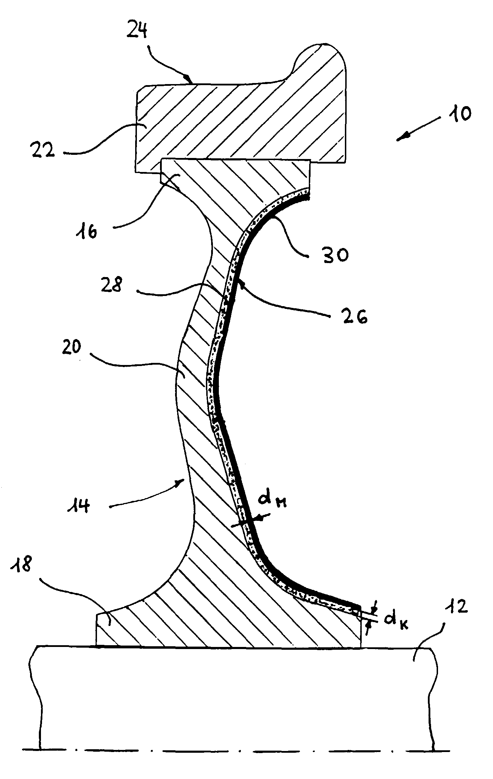

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur den teilweisen Querschnitt durch ein Schienenfahrzeugrad.

Ein Schienenfahrzeugrad 10 weist eine Radscheibe 14 aus beispielsweise einer Aluminiumlegierung auf, an deren Umfang eine Felge bzw. ein Laufkranz 22 aus beispielsweise Stahl oder einem Metal Matrix Composite aufgeschrumpft ist. Die Materialwahl für den Laufkranz 22 richtet sich nach der gewünschten hohen Abriebfestigkeit der Lauffläche 24, die als Kontaktfläche zwischen Rad und Schiene einem hohen Verschleiss ausgesetzt ist.

Der Umfangteil 16 der Radscheibe 14 ist gegenüber dem mittleren Scheibenteil 20 verdickt ausgebildet. Der innere Teil der Radscheibe 14 ist als eine ebenfalls verdickt ausgebildete Radnabe 18 ausgestaltet, über die das Schienenfahrzeugrad 10 an einer Radachse 12 festgelegt ist.

Die Radscheibe 14 ist einseitig mit einem Radschallabsorber 26 versehen. Dieser besteht aus einer auf der Oberfläche der Radscheibe 14 haftenden viskoelastischen Masse 28, die eine Zwischenschicht zwischen der Radscheibe 14 und einer mit dieser verbundenen Deckschicht 30 aus beispielsweise Stahl bildet. Diese deckt die Radscheibe 14 zwischen deren Umfangteil 16 und der Radnabe 18 im vorliegenden Beispiel vollflächig ab.

Die Dicke d_{K} der viskoelastischen Masse 28 sowie die Dicke d_{M} der Deckschicht 30 betragen beispielsweise je 2 mm. Die viskoelastische Masse 28 kann direkt als Klebemasse zur Verklebung der Deckschicht 30 mit der Radscheibe 14 dienen. Selbstverständlich ist es auch möglich, zwischen der viskoelastischen Masse 28 und der Radscheibe 14 einen in der Zeichnung nicht dargestellten Klebstofffilm vorzusehen.

Der Radschallabsorber 26 kann beispielsweise als Verbundwerkstoff durch vorgängiges Zusammenführen der viskoelastischen Masse 28 mit der Deckschicht 30 kontinuierlich hergestellt werden. Die gegebenenfalls mit der viskoelastischen Masse 28 bereits versehene Deckschicht 30 wird vor der Befestigung an der Radscheibe 14 durch Stanzen und Umformen an die Querschnittsform der Radscheibe 14 angepasst, die im mittleren Scheibenteil 20 entsprechend der in der Zeichnung dargestellten Ausführungsform gekrümmt oder auch planeben sein kann. Durch eine zweiteilige Ausbildung des Radschallabsorbers 26 ist es auch möglich, diesen an einem bereits montierten Rad zu befestigen.

Obschon im gezeigten Ausführungsbeispiel nur auf einer Seite der Radscheibe 14 ein Radschallabsorber 26 befestigt ist, kann bei einer Variante der Erfindung auf beiden Seiten der Radscheibe 14 je ein Radschallabsorber vorgesehen sein.

## Patentansprüche

1. Schienenfahrzeugrad mit Radscheibe (14) und Laufkranz (22), wobei zumindest eine der Oberflächen der Radscheibe (14) einen Radschallabsorber (26) in Form einer Zwischenschicht (28) aus einer viskoelastischen Masse und einer auf der Zwischenschicht haftenden Deckschicht (30) aufweist,
dadurch gekennzeichnet, dass
zumindest die Radscheibe (14) aus einem Aluminiumwerkstoff besteht.

2. Schienenfahrzeugrad nach Anspruch 1, dadurch gekennzeichnet, dass die Deckschicht (30) aus einem metallischen Werkstoff, insbesondere aus einem Stahlblech besteht.

3. Schienenfahrzeugrad nach Anspruch 1, dadurch gekennzeichnet, dass die Deckschicht (30) aus einem kohlenstoffaserverstärkten Kunststoff (CFK) besteht.

4. Schienenfahrzeugrad nach einem der Ansprüche 1 bis 3, dadurch gekennzeichnet, dass die Radscheibe (14) aus einer Aluminiumlegierung besteht.

5. Schienenfahrzeugrad nach einem der Ansprüche 1 bis 3, dadurch gekennzeichnet, dass die Radscheibe (14) aus einem partikel- oder faserverstärkten Aluminiumwerkstoff besteht.

6. Schienenfahrzeugrad nach einem der Ansprüche 1 bis 5, dadurch gekennzeichnet, dass der Laufkranz (22) aus Stahl besteht und auf die Radscheibe (14) aufgeschrumpft ist.

7. Schienenfahrzeugrad nach einem der Ansprüche 1 bis 5, dadurch gekennzeichnet, dass der Laufkranz (22) aus einem partikel- oder faserverstärkten Aluminiumwerkstoff besteht und auf die Radscheibe (14) aufgeschrumpft ist.

8. Schienenfahrzeugrad nach Anspruch 5, dadurch gekennzeichnet, dass der Laufkranz (22) integral an die Radscheibe (14) angeformt ist und aus demselben partikel- oder faserverstärkten Aluminiumwerkstoff besteht.

9. Schienenfahrzeugrad nach einem der Ansprüche 1 bis 8, dadurch gekennzeichnet, dass die Dicke (d_{K}) der viskoelastischen Zwischenschicht (28) 0,5 bis 4 mm, vorzugsweise 1 bis 3 mm beträgt.

10. Schienenfahrzeugrad nach einem der Ansprüche 1 bis 9, dadurch gekennzeichnet, dass die Dicke (d_{M}) der Deckschicht (30) 0,5 bis 4 mm, vorzugsweise 1 bis 3 mm beträgt.

11. Schienenfahrzeugrad nach einem der Ansprüche 1 bis 10, dadurch gekennzeichnet, dass der Radschallabsorber (26) geteilt ist und vorzugsweise aus zwei Halbschalen besteht.

12. Schienenfahrzeugrad nach einem der Ansprüche 1 bis 11, dadurch gekennzeichnet, dass der Radschallabsorber (26) mit der Radscheibe (14) verklebt ist.

13. Schienenfahrzeugrad nach Anspruch 12, dadurch gekennzeichnet, dass der Radschallabsorber (26) mittels der viskoelastischen Zwischenschicht (28) mit der Radscheibe (14) verklebt ist.

14. Schienenfahrzeugrad nach Anspruch 12, dadurch gekennzeichnet, dass der Radschallabsorber (26) über eine zwischen der viskoelastischen Zwischenschicht (28) und der Radscheibe (14) aufgetragene Klebstoffschicht mit der Radscheibe verklebt ist.

15. Schienenfahrzeugrad nach einem der Ansprüche 1 bis 14, dadurch gekennzeichnet, dass der Radschallabsorber (26) die Radscheibe (14) zumindest in einem mittleren Scheibenteil (20) zwischen einer Radnabe (18) und einer äusseren Verdickung (16) bedeckt.

16. Schienenfahrzeugrad nach Anspruch 15, dadurch gekennzeichnet, dass der Radschallabsorber (26) die Radscheibe (14) vollflächig bedeckt.
